# EUROPEAN PATENT SPECIFICATION

(11) **EP 1 768 533 B1**
(45) Date of publication and mention of the grant of the patent: **22.08.2007**
(21) Application number: 05747819.0
(22) Date of filing: 16.06.2005
(51) Int. Cl.: A47J 31/44

(54) **A COFFEE MACHINE**
KAFFEEMASCHINE
MACHINE A CAFE

(30) Priority: 25.06.2004 TR 200401541
(43) Date of publication of application: 04.04.2007
(73) Proprietor: Arçelik Anonim Sirketi, 34950 Istanbul (TR)
(72) Inventor: HASANREISOGLU, Levent, Arcelik Anonim Sirketi, 34950 Istanbul (TR); CAGLIN, Umit, Arcelik Anonim Sirketi, 34950 Istanbul (TR); GUNDUZ, Nihat, Arcelik Anonim Sirketi, 34950 Istanbul (TR); SIMSIR, Bogac, Arcelik Anonim Sirketi, 34950 Istanbul (TR)
(86) International application number: PCT/IB2005/051986
(87) International publication number: WO 2006/000961

(56) References cited:
- US-A- 4 630 532
- US-A- 5 370 040
- US-B1- 6 321 638
- US-B1- 6 357 342

## Description

This invention relates to a coffee machine, preferably suitable for preparing Turkish coffee.

In an automatic coffee machine, during the preparation of Turkish coffee, cold water is transferred from a water reservoir into vessels where coffee is cooked by means of pumps and then, coffee cooking process is started. When the water reservoir does not contain sufficient amount of water, water should be added and when it is dirty, it should be cleaned by being taken out of the compartment where it is placed inside the coffee machine. In the current state of the art, in automatic coffee machines, various types of water reservoirs designed so as to facilitate the attaching and detaching of it to / from the machine and the adding of water into it, are utilized.

In the United States Patent Document US 6357342, a description is given of an application wherein, in an automatic coffee machine in cylindrical form which can be mounted under a cabinet, such principle components as the carafe, the filter holder and the water reservoir in semi-circular form are placed into a cylindrical cavity in the body and, by rotating the coffee machine desired component may be taken out.

In the United States Patent Document US 5370040, a water reservoir mounted to a portion inside the main housing in an automatic coffee machine, a handle which extends outwardly from the front wall of the mentioned water reservoir and is used to attach and detach the water reservoir and, the concave shape of the wall of the water reservoir where said handle is positioned and whereby the user can comfortably carry the water reservoir by grasping it from the handle and can fill water from a water source are described.

In the European Patent Document EP 1267687, a description is given of a water reservoir which is utilized in an automatic coffee machine and, is formed by a tubular body to rotate about a vertical axis in order to occupy closed and extended positions.

Document US-A-4 630 532 discloses in a coffee machine a water reservoir with a drawer able to slide on the water reservoir, whereby water is added into the water reservoir as said drawer is partially pulled out of the coffee machine.

The aim of the present invention is the realization of a coffee machine comprising a water reservoir which stores the water used while preparing such beverages as coffee and which enables the user to practically add water to it and to clean.

The coffee machine realized in order to attain above mentioned aim of the present invention is illustrated in the attached figures where:

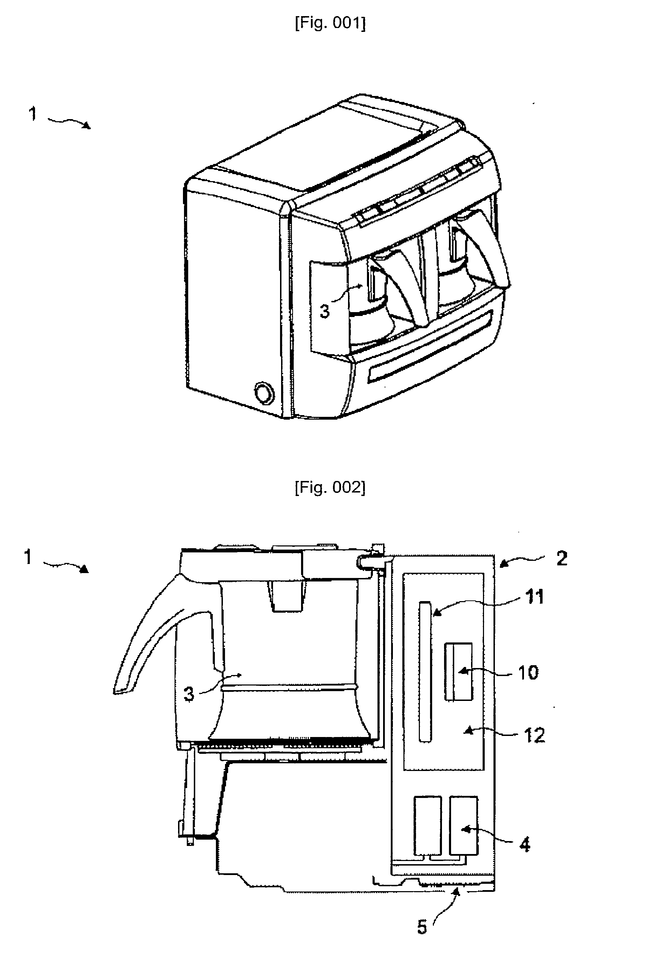

Fig.1 - is a perspective view of a coffee machine.

Fig.2 - is a side schematic view of a coffee machine.

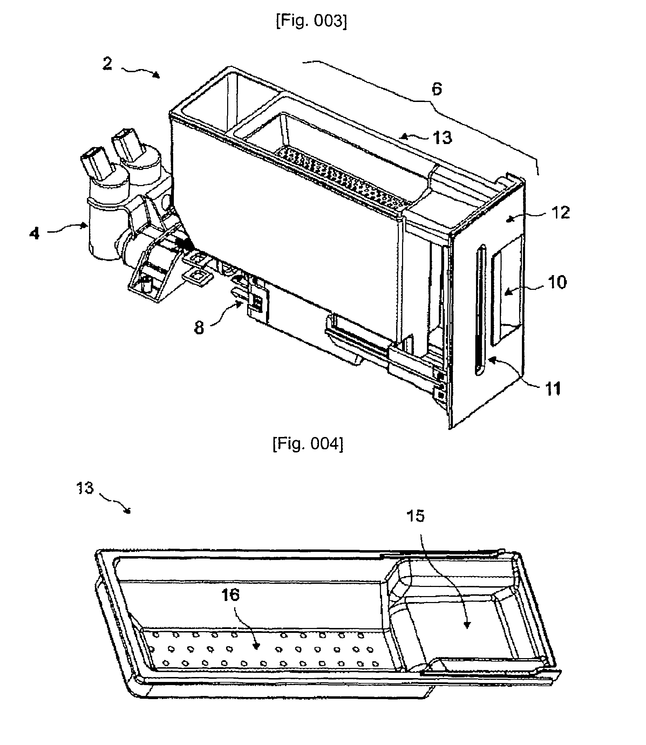

Fig.3 - is a perspective view of a water reservoir, a drawer and a pump group.

Fig.4 - is a perspective view of the water pouring cap of a water reservoir.

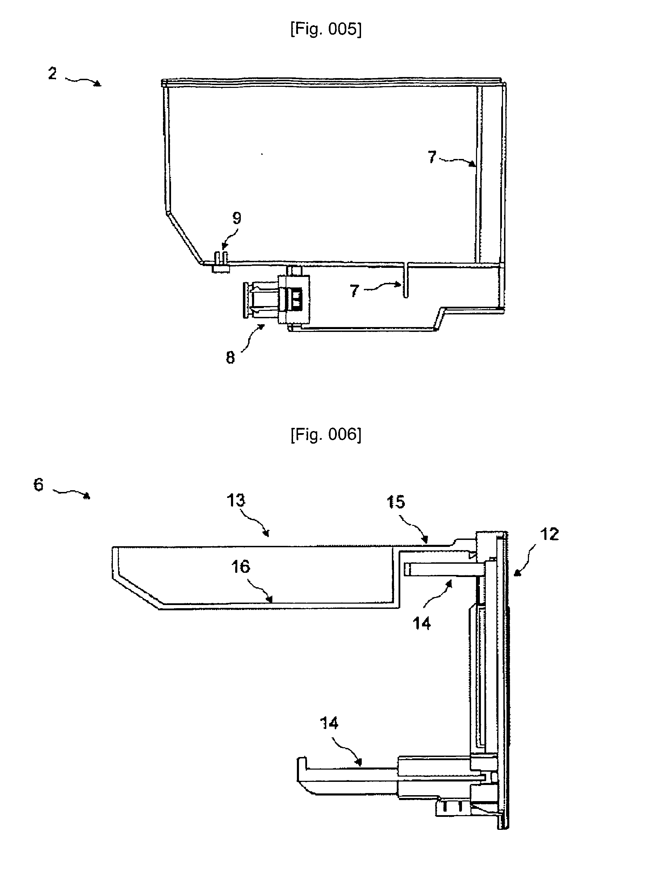

Fig.5 - is a front view of a water reservoir.

Fig.6 - is a front view of a water reservoir drawer.

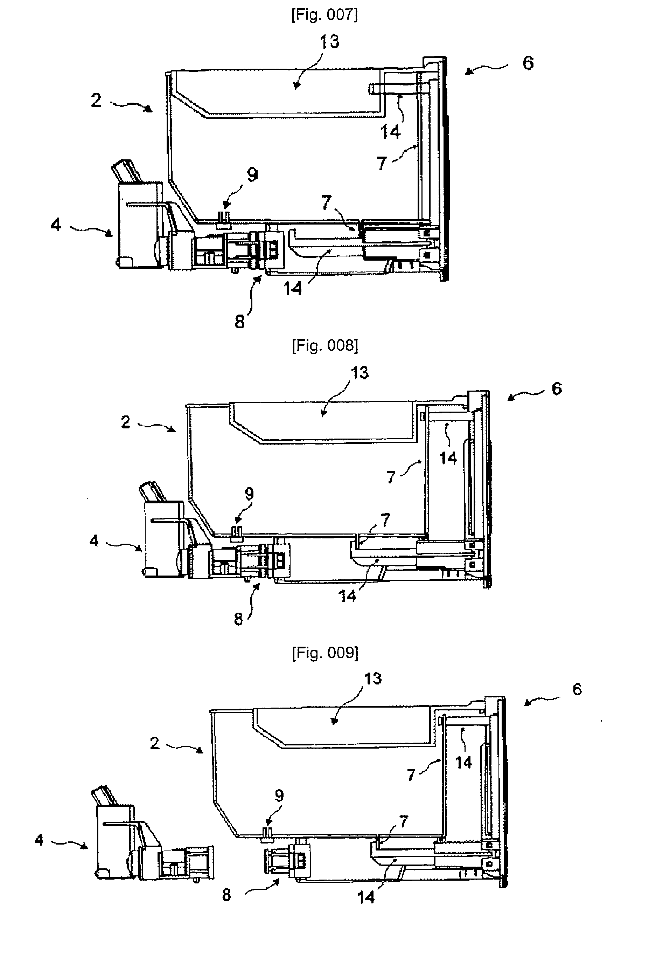

Fig.7 - is a schematic view of a water reservoir connected to a pump group, wherein its drawer is in closed position.

Fig.8 - is a schematic view of a water reservoir connected to a pump group, wherein its drawer is in open position.

Fig.9 - is a schematic view of a water reservoir detached from a pump group, wherein its drawer is in open position.

The elements shown in figures are numbered individually as follows:
1. Coffee machine
2. Water reservoir
3. Cooking chamber
4. Pump group
5. Dripping tray
6. Drawer
7. Stopper
8. Pump connection
9. Level sensor
10. Handle
11. Window
12. Drawer lid
13. Water pouring cap
14. Guide arm
15. Platform
16. Filter tray

The coffee machine (1) comprises an attachable and detachable water reservoir (2), a cooking chamber (3) where cooking and heating processes are performed, a pump group (4) which consists of pumps and valves and is used to transfer the water inside the water reservoir (2) to the cooking chamber (3), a dripping tray (5) which is positioned under the water reservoir (2), prevents waters that drip to the inside of the coffee machine (1) as the water reservoir (2) is attached and detached, from leaking outside by collecting them in an enclosed space, wherein water is dried by means of the heat generated in the coffee machine (1) and, a drawer (6) which can slide on the water reservoir (2), whereby water is added into the water reservoir (2) without moving it as said drawer (6) is partially pulled out of the coffee machine (1) and whereby, as it is completely pulled out, it moves the water reservoir (2) and thus the water reservoir (2) is also taken out of its position.

The water reservoir (2) comprises one or more than one stopper (7) limiting the motion of the drawer (6), a pump connection (8) that is attachable and detachable to / from the pump group (4) whereby a sealed connection is established and, one or more than one level sensor (9) whereby the user is warned as the water level decreases, which preferably consists of electrode ends detecting the water level by sensing the resistance difference in dry medium and inside the water.

The drawer (6) comprises a drawer lid (12) with a handle (10) whereby it is pulled by grasping and a window (11) where the water level is seen; a water pouring cap (13) which covers the water reservoir (2), is used to transfer the water spilled on it to the water reservoir (2) and slides on the water reservoir (2) as the drawer (6) is pulled out and, one or more than one guiding arm (14) functioning as a guide to the motion of the drawer (6) moving on the water reservoir (2) and whereby the drawer (6) is partially pulled out so as water can be added as said guiding arm (14) bears to the stoppers (7).

The water pouring cap (13) comprises a platform (15) where water is poured onto from a water source to be added into the water reservoir (2), which is inclined with respect to the horizontal plane and facilitates the flow of the water towards the water reservoir (2) and, a filter tray (16) positioned at a lower level than the platform (15), whereby water flowing from the platform (15) is collected and transferred into the water reservoir (2) as filtered by passing through the holes positioned on said filter tray (16).

If it is desired to add water into the water reservoir (2), the drawer (6) is started to be pulled out of the coffee machine (1) by being grasped from the handle (10) located on the drawer lid (12). The water pouring cap (13) that is connected to the drawer (6) is partially pulled out so that the platform (15) where water is to be poured onto is positioned outside of the coffee machine (1), wherein the motion is stopped as water-adding position is attained when the guiding arms (14) bear to the stoppers (7). Water is poured onto the platform (15) from a water source wherein it flows downwards from the platform (15) to the filter tray (16) and to the water reservoir (2) by being filtered through the holes on the filter tray (16). If the water reservoir (2) is desired to be completely taken out of its position for such purposes as cleaning, the drawer (6) is pulled out of the coffee machine (1) and, it is continued to be pulled, also after water-adding position is attained where the guide arms (14) bear to the stoppers (7). As a force sufficient to detach the pump connection (8), which is detachably attachable to the pump group (4), from the pump group (4), is attained, the pump connection (8) whereby the water reservoir (2) is fixed to the coffee machine (1) is detached from the pump group (4) and, the water reservoir (2) is taken out of its position inside the coffee machine (1) by being moved on the sliding ways under the coffee machine (1). As the water reservoir (2) is taken out of its position, water that remains inside the pump connection (8) spills out to be collected on the dripping tray (5) and, evaporates in time or through the heat generated as the coffee machine (1) is operated.

Since waters dripping to the inside of the coffee machine (1) as the water reservoir (2) is attached and detached are collected on the dripping tray (5) without contacting anywhere else and since the dripping tray (5) is in such a form that restrains dripping water, it is achieved to keep the coffee machine (1) and its surroundings dry and clean.

In the coffee machine (1) in accordance with the present invention, by means of the drawer (6), without being taken out of its position water may easily be added to the water reservoir (2) where water to be used in the coffee cooking process is stored and, if desired, for instance for cleaning purposes, the water reservoir (2) may be completely taken out of its position.

## Claims

1. A coffee machine (1) comprising; an attachable and detachable water reservoir (2); a cooking chamber (3) where cooking and heating processes are performed and; a pump group (4) which consists of pumps and valves and is used to transfer the water inside the water reservoir (2) to the cooking chamber (3); and **characterized by** a drawer (6) which is able to slide on the water reservoir (2), whereby water is added into the water reservoir (2) without moving it as said drawer (6) is partially pulled out of the coffee machine (1) and whereby, as it is completely pulled out, it moves the water reservoir (2) and thus the water reservoir (2) is also taken out.

2. A coffee machine (1) as described in Claim 1, **characterized by** a drawer (6) that comprises a water pouring cap (13) which covers the water reservoir (2), used to transfer the water spilled on it to the water reservoir (2) and slides on the water reservoir (2) as the drawer (6) is pulled out.

3. A coffee machine (1) as described in Claim 2, **characterized by** a drawer (6) comprising a water pouring cap (13) with a platform (15) where water is poured onto from a water source to be added into the water reservoir (2) and, a filter tray (16) positioned at a level lower than the platforms level (15), whereby water flowing from the platform (15) is collected and transferred into the water reservoir (2) as filtered by passing through the holes positioned on said filter tray (16).

4. A coffee machine (1) as described in Claim 3, **characterized by** a drawer (6) comprising a water pouring cap (13) with a platform (15) which is inclined with respect to the horizontal plane and facilitates the flow of water towards the water reservoir (2).

5. A coffee machine (1) as described in Claim 1, **characterized by** a water reservoir (2) which comprises one or more than one stopper (7) limiting the motion of the drawer (6), a pump connection (8) that is attachable and detachable to / from the pump group (4) whereby a sealed connection is established and, one or more than one level sensor (9) whereby the user is warned as the water level decreases, which preferably consists of electrode ends detecting the water level by sensing the resistance difference in dry medium and inside the water.

6. A coffee machine (1) as described in Claim 1, **characterized by** a drawer (6) comprising a drawer lid (12) with a handle (10) whereby it is pulled by grasping and a window (11) where the water level is seen.

7. A coffee machine (1) as described in Claims 1 and 5, **characterized by** a drawer (6) comprising one or more than one guiding arm (14) functioning as a guide to the motion of the drawer (6) moving on the water reservoir (2) and whereby the drawer (6) is partially pulled out so as water can be added as said guiding arm (14) bears to the stoppers (7).

8. A coffee machine (1) as described in Claims 1 and 5, **characterized by** a dripping tray (5) which is positioned under the water reservoir (2), prevents water that drip to the inside of the coffee machine (1) as the water reservoir (2) is attached and detached, from leaking outside by collecting them in an enclosed space, wherein water is dried by means of the heat generated in the coffee machine (1).

## Patentansprüche

1. Kaffeemaschine (1), umfassend: einen anbringbaren und lösbaren Wasserbehälter (2); eine Kochkammer (3), wo der Kochvorgang und der Erwärmungsvorgang durchgeführt werden; eine Pumpengruppe (4), die aus Pumpen und Ventilen aufgebaut ist, und dazu benutzt wird, das Wasser im Wasserbehälter (2) in die Kochkammer (3) zu transportieren; **gekennzeichnet durch** ein Schubfach (6), das auf dem Wasserbehälter (2) verschiebbar ist, wodurch dem Wasserbehälter (2) Wasser hinzugefügt werden kann, ohne ihn zu bewegen, indem das Schubfach (6) teilweise aus der Kaffeemaschine (1) herausgezogen wird, und wodurch es, wenn es vollständig herausgezogen wird, den Wasserbehälter (2) bewegt, so dass auch der Wasserbehälter (2) herausgezogen wird.

2. Kaffeemaschine (1) nach Anspruch 1, **gekennzeichnet durch** ein Schubfach (6), das eine Wassergießkappe (13) umfasst, die den Wasserbehälter (2) bedeckt, und dazu benutzt wird, das Wasser, das in sie geschüttet wird, in den Wasserbehälter (2) zu übertragen, und die auf dem Wasserbehälter (2) verschoben wird, wenn das Schubfach (6) herausgezogen wird.

3. Kaffeemaschine (1) nach Anspruch 2, **gekennzeichnet durch** ein Schubfach (6), das eine Wassergießkappe (13) mit einer Plattform (15), auf die Wasser von einer Wasserquelle gegossen wird, die dem Wasserbehälter (2) hinzugefügt werden soll, und einen Filtereinsatz (16) umfasst, der auf einer Höhe unterhalb der Höhe der Plattform (15) angeordnet ist, wodurch Wasser, das von der Plattform (15) herabströmt, aufgefangen und in den Wasserbehälter (2) geleitet wird, indem es **durch** die Öffnungen dringt, die in dem Filtereinsatz (16) vorgesehen sind.

4. Kaffeemaschine (1) nach Anspruch 3, **gekennzeichnet durch** ein Schubfach (6), das eine Wassergießkappe (13) mit einer Plattform (15) aufweist, die in Bezug auf die horizontale Ebene geneigt ist, und das Fließen des Wassers in Richtung des Wasserbehälters (2) erleichtert.

5. Kaffeemaschine (1) nach Anspruch 1, **gekennzeichnet durch** einen Wasserbehälter (2), der einen oder mehrere Anschläge (7), welche die Bewegung des Schubfachs (6) begrenzen, eine Pumpenverbindung (8), die an der Pumpengruppe (4) anbringbar und von dieser lösbar ist, wodurch eine dichte Verbindung erreicht wird, und einen oder mehrere Pegelmesser (9) umfasst, **durch** die der Benutzer unterrichtet wird, wenn der Wasserpegel abnimmt, und die vorzugsweise als Elektrodenenden ausgebildet sind, die den Wasserpegel ermitteln, indem sie die Widerstandsdifferenz zwischen dem trockenen Medium und dem Wasser messen.

6. Kaffeemaschine (1) nach Anspruch 1, **gekennzeichnet durch** ein Schubfach (6), das einen Schubfachdeckel (12) mit einem Griff (10), mit dem es **durch** Ergreifen desselben herausgezogen wird, und ein Fenster (11) umfasst, in dem der Wasserpegel zu erkennen ist.

7. Kaffeemaschine (1) nach den Ansprüchen 1 und 5, **gekennzeichnet durch** ein Schubfach (6), das einen oder mehrere Führungsarme (14) umfasst, die als eine Führung für die Bewegung des Schubfachs (6) dienen, das sich auf dem Wasserbehälter (2) bewegt, wodurch das Schubfach (6) teilweise herausgezogen wird, so dass Wasser hinzugefügt werden kann, während der Führungsarm (14) an den Anschlägen (7) anliegt.

8. Kaffeemaschine (1) nach den Ansprüche 1 und 5, **gekennzeichnet durch** einen Tropfeinsatz (5), der unter dem Wasserbehälter (2) angeordnet ist, und der verhindert, dass Wasser, das ins Innere der Kaffeemaschine (1) tropft, während der Wasserbehälter (2) angebracht und gelöst wird, nach außen dringt, indem es in einem umschlossenen Raum aufgefangen wird, wo das Wasser **durch** die Wärme, die in der Kaffeemaschine (1) erzeugt wird, getrocknet wird.

## Revendications

1. Machine à café (1) comprenant un réservoir d'eau détachable (2) ; une chambre de cuisson (3) dans laquelle les processus de cuisson et de chauffage sont performants ; un groupe de pompe (4) muni des pompes et valves et utilisé pour transmettre l'eau depuis le réservoir d'eau (2) à la chambre de cuisson (3) ; **caractérisée par** un tiroir (6) capable de glisser sur le réservoir d'eau (2), et par lequel l'eau est entrée dans le réservoir d'eau (2) sans qu'il y ait besoin de bouger ce dernier, ledit tiroir (6) étant partiellement tiré vers l'extérieur de la machine à café (1), et par lequel, quand il est complètement tiré, le réservoir d'eau (2) peut bouger et ainsi le réservoir d'eau (2) peut être enlevé.

2. Machine à café (1) selon la revendication 1, **caractérisée par** un tiroir (6) comprenant un bouchon de coulage d'eau (13) qui couvre le réservoir d'eau (2), utilisé pour transmettre l'eau coulée vers le réservoir d'eau (2) et ayant la fonctionnalité de glisser sur le réservoir d'eau (2) quand ledit tiroir (6) est tiré vers l'extérieur.

3. Machine à café (1) selon la revendication 2, **caractérisée par** un tiroir (6) comprenant un bouchon de coulage d'eau (13) avec une plate-forme (15) sur laquelle l'eau est coulée depuis une source d'eau pour être transmise dans le réservoir d'eau (2) et un plateau de filtre (16) placé à un niveau inférieur à celui de la pate-forme (15), par lequel l'eau venant de la plate-forme (15) est collectée et transmise dans le réservoir d'eau (2), tout en étant filtrée en passant par les trous placés sur ledit plateau de filtre (16).

4. Machine à café (1) selon la revendication 3, **caractérisée par** un tiroir (6) comprenant un bouchon de coulage d'eau (13) avec une plate-forme (15) inclinée par rapport au plan horizontal, et facilitant ainsi le coulage de l'eau vers le réservoir d'eau (2).

5. Machine à café (1) selon la revendication 1, **caractérisée par** un réservoir d'eau (2) comprenant un ou plusieurs bouchon(s) (7) capable(s) de limiter le mouvement du tiroir (6), une connexion de pompe (8) détachable sur le groupe de pompe (4) par laquelle une connexion close est établie, et un ou plusieurs capteur(s) de niveau (9) par le(s)quel(s) l'utilisateur est averti lorsque le niveau d'eau baisse, qui, d'ailleurs, consiste de préférence en des bouts d'électrode détectant le niveau d'eau en captant la différence de résistance entre le milieu sec et l'intérieur de l'eau.

6. Machine à café (1) selon la revendication 1, **caractérisée par** un tiroir (6) comprenant un couvercle de tiroir (12) avec un manche (10) par lequel ledit tiroir est tiré en saisissant et une fenêtre (11) où le niveau d'eau devient visible.

7. Machine à café (1) selon les revendications 1 et 5, **caractérisée par** un tiroir (6) comprenant un ou plusieurs levier(s) de guidage (14) qui fonctionne(nt) comme un guide pour orienter les mouvements du tiroir (6) bougeant sur le réservoir d'eau (2) et qui permet l'ouverture partielle du tiroir (6) vers l'extérieur lorsque ledit levier de guidage (14) s'appuie sur des bouchons (7), pour assurer l'ajout d'eau.

8. Machine à café (1) selon les revendications 1 et 5, **caractérisée par** un bac récepteur (5) placé sous le réservoir d'eau (2), qui permet d'empêcher l'eau de couler dans la machine à café (1) au point où le réservoir d'eau (2) est monté ou démonté, lequel assure également la collection de l'eau fuite dans une sphère fermée, dans laquelle l'eau est séchée par les moyens de chauffage de la machine à café (1).
